# EUROPEAN PATENT SPECIFICATION

(11) **EP 3 079 789 B1**
(45) Date of publication and mention of the grant of the patent: **18.04.2018**
(21) Application number: 14869937.4
(22) Date of filing: 12.12.2014
(51) Int. Cl.: B01D 35/06, A01C 21/00, B03C 1/033, B03C 1/28

(54) **METHOD AND SYSTEM OF USING ELECTROMAGNETISM TO CONTROL FERTILIZER LEACHING**
VERFAHREN UND SYSTEM ZUR VERWENDUNG VON ELEKTROMAGNETISMUS ZUR KONTROLLE VON DÜNGEMITTELLAUGUNG
PROCÉDÉ ET SYSTÈME D'UTILISATION DE L'ÉLECTROMAGNÉTISME POUR RÉGULER UNE LIXIVIATION D'ENGRAIS

(30) Priority: 13.12.2013 US 201361915967 P
(43) Date of publication of application: 19.10.2016
(73) Proprietor: Rossi, Timothy James, Salinas, CA 93901 (US)
(72) Inventor: Rossi, Timothy James, Salinas, CA 93901 (US)
(74) Representative: J A Kemp
(86) International application number: PCT/US2014/070094
(87) International publication number: WO 2015/089439

(56) References cited:
- US-A- 4 344 074
- US-A- 4 594 215
- US-A- 5 074 986
- US-A- 5 420 402
- US-A- 5 570 030
- US-A- 5 570 030
- US-A- 6 093 287
- US-A1- 2004 126 190
- US-A1- 2013 192 129

## Description

### BACKGROUND

Fertilizer leaching is a major problem for the agricultural industry, a headache for most growers, a challenge for fertilizer companies, and a serious concern to public health and the future of our environment.

### SUMMARY OF THE INVENTION

According to a first aspect of the present invention there is provided the device of claim 1.

According to a second aspect of the present invention there is provided the method of claim 8.

According to a third aspect of the present invention there is provided the method of claim 9.

Additional aspects of the invention are set out in claims 2-7 and 10-15.

### BRIEF DESCRIPTION OF THE FIGURES

Aspects of this invention are described with reference to specific embodiments thereof. Other features of this invention can be appreciated with reference to the figures, in which:
**FIG. 1** depicts an illustration of diamagnetism.
**FIG. 2** depicts an illustration of a charged particle interacting with a direct current (DC)
**FIG. 3** depicts a diagram illustrating differences between direct currents (DC) and alternating currents (AC).
**FIG. 4** depicts the Lewis structure of the nitrate ion.
**FIG. 5** depicts an illustration of paramagnetism.
**FIG. 6** depicts an embodiment of a design to stop nitrate leaching.
**FIG. 7** depicts an alternate embodiment of a design to stop nitrate leaching.
**FIG. 8** depicts a cross section of a standard 40" planting bed.
**FIG. 9** depicts an embodiment of an electromagnetic containment design.
**FIG. 10** depicts an aerial view of an embodiment of underground loop connectors and straight line connectors on a one acre field set-up on 12 beds and showing a source of electric current.
**FIG. 11** depicts and embodiment for assembling underground loop connectors. **FIG. 12** depicts an alternative embodiment of a straight line connector.
**FIG. 13** depicts an alternative embodiment of a female connector.
**FIG. 14** depicts results of an experiment to determine the conductivity of nitrate fertilizer.

### SUMMARY

Nitrate, phosphate and sulfate are particular relevant. Nitrate and phosphate can be particularly difficult, with some ground water used for public drinking having nitrate concentrations of up to 2000 parts per million (ppm). As more agricultural lands are exploited, and as ground becomes progressively less fertile, there is a tendency to increase the use of exogenous fertilizers, including nitrate- and phosphate- based fertilizers. Such increased concentrations can lead to decreases in normal soil microbes, thereby decreasing nitrogen fixation, particularly by non-leguminous plants.

There is approximately 1 million tons of nitrogen fertilizer currently in the ground, and within about 10 to about 50 years, this may hit the groundwater and produce enviromnental and societal disruption. Additionally, by increasing extracting ground water, there can be salt intrusion into well water, and produce health problems.

Nearly every fertilizer element typically sold by industrial fertilizer producers has a charge associated with it, be it negative or positive (with the exception of urea, which is neutral).

Present formulations of certain liquid fertilizers, such as AN20, which contains both a negative and a positive charged nitrogen source, may partially stick to the soil within which it is deposited by a mechanism of cation exchange, without immediately leaching into the groundwater. Because organic matter and the clay particles in the soil are negatively charged, they serve as a natural reservoir to collect positively charged ions, but they can also contribute to leaching, as they naturally repel negative charges. Therefore, for all negatively charged fertilizer formulations entering the soil, this natural mechanism will not be effective and another mechanism is needed.

Embodiments according to the present invention utilize an electric current to produce a magnetic field, which will levitate or influence the motion of a negatively charged fertilizer.

Embodiments according to the present invention are designed to work with drip tape or sprinkler irrigation during the application of fertilizers to stop leaching of ions or ionic compounds such as nitrate into the environment where groundwater and other surroundings cold be contaminated, and achieving a pound for pound application of fertilizer to the targeted area. Embodiments according to the present invention include using electromagnetism to attract the fertilizer and suspend it within the soil beds.

Embodiments according to the present invention apply a magnetic or electric field to deflect fertilizers such as AN20, which contains a leach-able form of 10% Nitrate Nitrogen, away from the sinking irrigation water used when delivering the fertilizer, and into the surrounding soils. Embodiments according to the present invention include configuring the angle of entry of the fertilizer particles into the induced magnetic fields in a direction substantially transverse to the magnetic field. Embodiments according to the present invention configure the method of delivery and type of current, magnitude of current, voltage, ohms, and amps to achieve separation of the fertilizer from the irrigation water.

The benefits of the invention include: reduced levels of excess fertilizer into the groundwater and the environment by electromagnetically decreasing the downward movement of a negative charged species (e.g. nitrate, phosphate, and sulfate), less cost due to wastage, more efficient application of fertilizers to plants, easier compliance with regulatory policies, and a field installation that is easily manageable.

### DETAILED DESCRIPTION

In the descriptions that follow, it is to be understood that the following terms are to mean:
The indefinite article "a" means one or more.

The term "comprising" means includes, but is not limited to.

The term "consisting of' means includes and is limited to.

The term "said" and "the" are the definite article.

Terms expressed in capital letters are to be considered the same as their equivalents expressed in lower case letter.

### Introduction to Certain Physical Principles

Before describing certain aspects and embodiments, below is a brief review of selected principles of physics that apply.
1. Everything that has a mass has a gravitational field.
2. Everything that has a charge has an electric field.
3. Everything that has a charge and is put into motion has a magnetic field (B field).
4. Ampere's Law - whenever you have an electric current, you have a magnetic field that circulates around that current. With magnetic charges specifically pertaining to magnets: opposite poles attract and like poles repel.
5. With magnetic fields specifically created by an electric current: opposite poles repel and like poles attract.
6. The Department of Energy explains that when a magnetic material is cooled the electrons move slower, ordering the movement of the electrons and increasing the magnetism of a material. When a magnet is heated, the electrons circling the nucleus of a material increase in speed and exhibit chaotic movement. They lose their magnetism as the electrons fail to become ordered enough to attract another object.
7. Charges that move in magnetic fields always move in circles, but the magnetic field lines that are created by an electric current will always revolve moving charges perpendicular to the direction of the current.
8. The direction of the force exerted by a magnetic field on a moving charge is perpendicular to both the B field and the velocity.
9. A force that is perpendicular to the velocity of a particle can change the direction of the particle, but if the force were to run parallel to the velocity of a particle, it would have no effect on the particle.
10. A negative charge is attracted to a high electric potential, a positive charge is attracted to a low potential, and the unit of electric potential is the volt. Conversely, a low electric potential repels negative charges and a high potential repels positive charges.

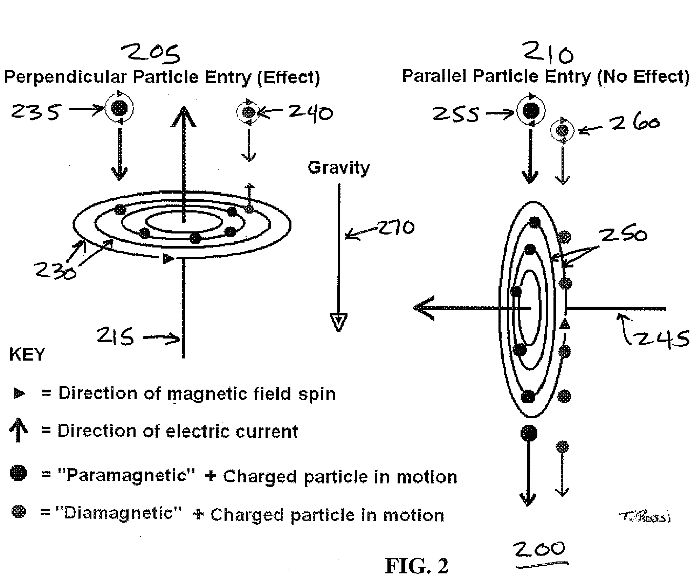

11. **FIG. 2** depicts interaction between a charged particle with a direct current. The particle is depicted coming into contact with a magnetic field, which is generated by a direct current (DC). Current is defined as the direction of the flow of positive charges, but in reality, it's the electrons that do the moving and therefore transport electrical charge...electrons move from the negatively charged object to the positively charged object...electrons, not positive charges, carry the current (Holzner, Steven, Physics II for Dummies, Indianapolis, IN, Wiley Publishing, 2010, p.44).
12. The electron is a speck of negative electricity that zips around inside of atoms and migrates along wires carrying electric current (Ford, Kenneth W, The Quantum World: Quantum Physics for Everyone, Cambridge, MA, Harvard University Press, 2004, p. 2).
13. When something gets charged negatively, electrons are added to it. When it gets charged positively, electrons are taken away, leaving the protons where they are, and the net surplus of protons makes a positive charge (Holzner, p. 41).
14. There are two physical ways to charge a neutral object: by contact or by the process of induction. Charging by contact is fairly straight-forward and simple; you just touch the object with something charged and the object becomes charged. For example, a negatively charged rod is brought into contact with a ball that is originally neutral and the ball is left with a negative charge (Holzner, p. 41).
15. With induction, if you take a glass rod and some silk and rub the two together, a transfer of electrons from one material to the other occurs due to molecular forces between the two types of material. Different materials have different propensities to exchange electron. Now comes the clever part; you connect the far side of the object to the actual Earth, which acts as a huge reservoir of charge. The negative charges - the electrons - that are being forced to the far side of the object are frantic to get off of the object, because the charge on the rod is repelling them. By connecting the far side of the object to the ground with a wire, you provide those electrons with an escape route. And the electrons take that escape route by the millions and trillions (Holzner, pages 42, 43).
16. In the same way that electric charges create electric fields around them, north and south poles will set up magnetic fields around them... With a typical bar magnet, for example, the field goes from the north pole to the south pole outside the magnet, and back from south to north inside the magnet.
17. The most important distinction between magnetic fields and electric fields: electric fields are created at positive charge, and they are destroyed at negative charge...it is not that way with magnetic fields. Magnetic fields don't ever stop or start anywhere. They always make closed loops.
18. Magnetic Fields generated by electrical currents can be produced by Alternating Currents (AC) or Direct Currents (DC), but there are differences and limitations between them.

### Aspects of the Invention

The following are presented to provide general descriptions of aspects of the invention. It is to be understood that these aspects are not exclusive, and one or more of the following can be combined in a variety of ways within the skill of an ordinary person in the art.

A first aspect includes a device for producing a magnetic field within an agricultural bed, comprising:
an first insulated pipe segment having generally curved, closed side wall enclosing a space therein having a central axis, an open end, and a closed end;
said space having within it:
   an electrically conductive first elongated element having a first end and a second end,
   a second elongated electrically conductive element having a first end and a second end;
each of said second ends within said space near said closed end being electrically connected to each other, forming an electrically conductive loop within said closed end,
said first end of said first elongated element and said first end of said second element having electrically conductive portions extending through said open end of said pipe segment,
said first elongated element and said second elongated element being separated within said space except for the electrically conductive loop;
said first end of said first conductive element adapted to be connected to an anode of source of electric power,
said first end of said second conductive element being adapted to be connected to a cathode of said source of electric power.

Another aspect includes the any other aspect, further comprising:
an insulated straight line connector pipe segment having a generally curved closed side wall enclosing a space therein having a central axis and two ends, said sidewall having an opening therethrough, said space having a first and a second elongated conductive element therein generally parallel to said central axis;
said open end of said first insulated pipe segment of Claim 1 being sealingly attached to said insulated straight line connector pipe segment, said central axis of said first pipe segment being at an angle with respect to said central axis of said insulated straight line connector pipe segment, so that said first elongated pipe segment of Claim 1 becomes a vertical pipe segment, where the space of said vertical pipe segment is in continuity with said space of said straight line connector pipe segment,
said first end of said first electrically conductive elongated element of said vertical pipe segment is electrically connected to a first conductive elongated element within said space of said insulated straight line connector pipe segment,
said second end of said first electrically conductive elongated element of said vertical pipe segment being electrically connected to a second conductive elongated element with said insulated straight line connector pipe segment; and
said first and second conductive elongated elements within said straight line connector pipe segment extending through said open ends of said straight line connector pipe segment.

A further aspect includes any of the other aspects, comprising a power source electrically connected to said first and second conductive elongated elements extending from said open ends of said straight line connector pipe segment.

An additional aspect includes any of the other aspects where said power source being an alternating current (AC) source.

A further aspect includes any of the above aspects where said power source being a direct current (DC) source.

A still further aspect includes any of the other aspects, comprising a plurality of vertical pipe segments attached to said straight line connector pipe segment.

An additional aspect includes any of the other aspects, where each of said vertical pipe segments having a length in the range of about 4 inches to about 36 inches,
said vertical pipe segments are spaced apart on said straight line connector pipe segment with a spacing of about 6 inches to about 4 feet, thereby forming a linear array of vertical pipe segments attached to a straight line connector pipe segment, thereby producing a one-dimensional array of vertical pipe segments.

A still further aspect includes any of the other aspects, comprising a plurality of additional vertical pipe segments arranged generally in parallel to each other, each of said straight line connector pipe segments being electrically connected to each other in series with said power source, and having a lateral spacing in the range of about 12 inches to about 4 feet, thereby forming a two-dimensional array of vertical pipe segments.

An additional aspect includes a method for reducing leaching of an ionic fertilizer into ground water, comprising:
providing a device of any preceding aspect;
inserting said device into a bed of soil;
connecting said device to a source of electrical power; and
causing an electrical current to flow through said loop, thereby producing a magnetic field with magnetic field lines generally oriented at right angles to said central axis of said device.

Another aspect includes any of the other aspects, where said method for reducing leaching of an ionic fertilizer into ground water, comprising:
providing a device of any other aspect;
inserting the vertical segments of said device into a bed of soil;
connecting said device to a source of electrical power; and
causing an electrical current to flow through at least one of said plurality of loops, thereby producing at least one magnetic field with magnetic field lines generally oriented at right angles to said central axis of said at least one of said vertical pipes.

Another further aspect includes any of the other aspects, where said source of electrical power is an alternating current (AC) source, operating at:
a voltage of from about 1.0 Volt (V) to about 100 V,
a frequency of from about 60 Hertz (Hz) to about 1 gigaHertz (GHz), and
a power of from about 10⁻² Amperes (A) to about 15 A.

A still additional aspect includes any of the other aspects, where the magnetic field strength of at least one of said plurality of magnetic fields is in the range of about 10⁻⁶ Tesla (T) to about 1.0 T.

Yet further aspects include any other aspect, where said magnetic field strength of at least one of said plurality of magnetic fields is measured using a Gauss meter.

Additionally, another aspect includes any other aspect, said Gauss meter comprising a generally planar sensor and detects the magnetic field strength above the surface of said bed.

Further aspects include any other aspect, said Gauss meter comprising a probe inserted into the bed of soil to measure magnetic field strength under the surface of said bed.

Still further aspects include any other aspect, said magnetic field strength being estimated at the surface of said bed of soil using a piece of non-conductive material having a later of black sand magnetite (Fe₃O₄) thereon.

Additional aspects include any other aspect, said ionic fertilizer selected from the group of nitrates, phosphates, and sulfates.

Still additional aspects include any other aspect, where said fertilizer is selected from the group consisting of ammonium thiosulfate (12-0-0-26s), ammonium polyphosphate (10-34-0), urea ammonium nitrate (UAN 32), ammonium nitrate 20% (AN20), and calcium nitrate (CN9).

### Description of Embodiments

The net charge of a diamagnetic or paramagnetic molecule (positive or negative) is influenced by and against an electric current, when wires carrying an alternating current (AC) are oriented appropriately, so as to produce a series of alternating current magnetic fields. The AC design is configured to hold the position or reduce the leaching rate of a moving charge within an induced magnetic field, by exposing the moving charge (or molecule) to changing attractive and repulsive oscillating fields. In addition, it is postulated that the net charge of a diamagnetic or paramagnetic charge (positive or negative) is influenced by an electric current, where wires carrying a direct current are oriented appropriately, so as to produce a series of direct current magnetic fields. The DC design is configured to cause a net movement of charged particles in a given direction, as a result of a constant force in a given direction, to reduce the leaching rate or hold the charge (or molecule) in a position, located within the applied magnetic field.

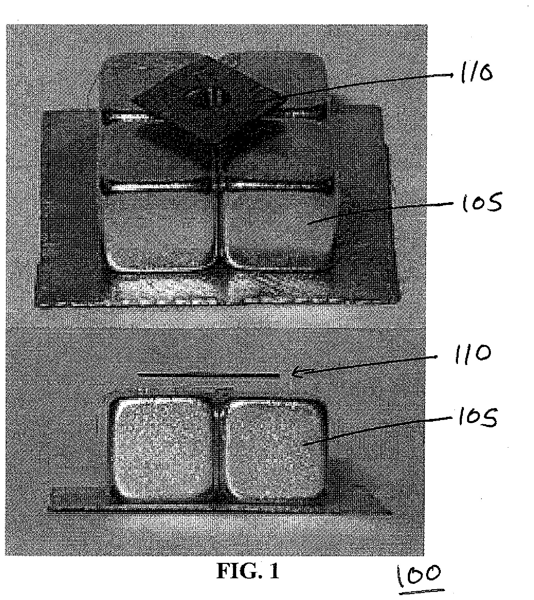

**FIG. 1** is an illustration **100** of diamagnetism. Diamagnetism is due to currents induced in atomic orbitals by an applied magnetic field. The induced currents produce a magnetization with the diamagnetic material that opposes the applied field, and the magnetism disappears when the applied field is removed. Several elements listed on the periodic table are ferromagnetic, paramagnetic, diamagnetic, or anti-ferromagnetic. **FIG. 1** illustrates levitation of a piece of graphite over a magnetic field. Top portion is a superior oblique view, and the bottom portion is a side view of apparatus demonstrating diamagnetism, showing magnet **105** and a piece of graphite **110.**

**FIG. 2** depicts an illustration **200** of forces acting on a charged particle in an electric field. Left side of **FIG**. **2** depicts perpendicular particle entry: effect **205,** and the right side of **FIG. 2** depicts parallel particle entry: no effect **210.** A force that is perpendicular to the velocity of a particle can change the direction of the particle, but if the force were to run parallel to the velocity of a particle, it would have no effect on the particle. On the left side of **FIG. 2****,** direction of current **215** generates a series of magnetic field lines **230.** Paramagnetic particle **235** and diamagnetic particle **240** are shown being influenced by magnetic field **230.** On the right side of **FIG. 2****,** electrical current **245** produces magnetic field lines **250.** Paramagnetic particle **255** and diamagnetic particle **260** are not affected by magnetic field **250.**

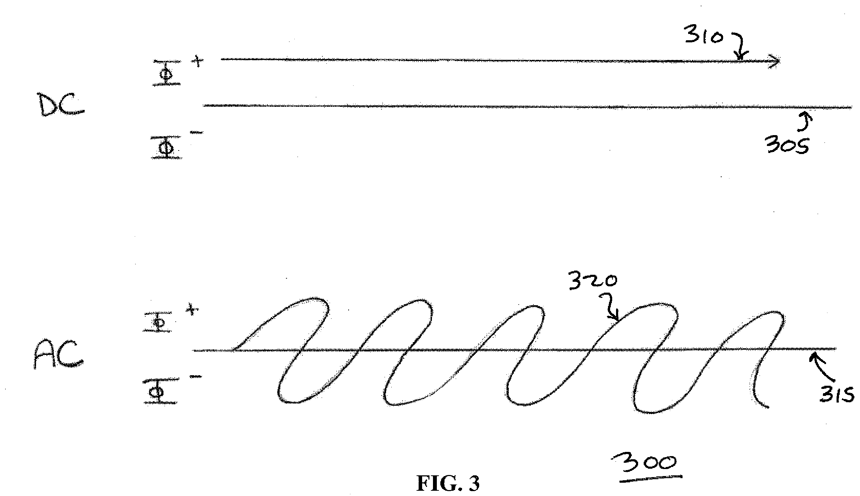

**FIG. 3** depicts an illustration **300** of a direct current (DC) magnetic field (top portion) oriented appropriately would be more likely (than AC) to cause a net movement of charged particles in a given direction as a result of a constant force in a given direction. Reference voltage **305** and direct current **310** are shown. Bottom portion of **FIG. 3** depicts a reference voltage **315** (i.e., 0 Volts) and an alternating current **320.** Electric fields cause a more straightforward attraction or repulsion of the charge...a properly oriented DC electric field may do that for certain sized particles (see Millikan's oil drop experiment), but it will tend to select charged particles on masses of certain sizes...a charge moving through a magnetic field will experience a force (Dr. Daniel Fernandez, PhD Physics). In the days of Nikola Tesla it was known that a direct current, which doesn't alternate, could travel only a short distance before the resistance of the wires overcame the current (Holzner, page 87), so back then, it was almost impossible to try and use DC to control nitrate leaching on long beds. However, with the modern development of a thyristor circuit, DC can now be used to achieve a longer run of electricity without power loss (Dr. Daniel Fernandez, PhD Physics). A thyristor circuit can covert from one DC voltage to another and give you the corresponding step down in current (Dr. Daniel Fernandez, PhD Physics).

The water will move the charged particle (nitrate) downward and how that will affect its soil penetration is interesting. When you have a charge moving downward, the force that this charge will experience, is given by the Lorenz Formula (**qv x B**). Newton's first law says that an object in motion remains in motion, unless something acts on it. The faster the charge moves the less strong magnetic field you would need to deflect the charge. If the charge has a bigger initial velocity, it's going to go in a much bigger circle. If you have a more massive particle, you're going to have a much bigger circle. It is harder to stop a bigger particle. The smaller the charge, then the bigger the radius will be. A bigger charge is going to feel more force (Dr. Daniel Fernandez, PhD Physics). Therefore, a small charge such as nitrate (with a charge of -1) or other negatively charged ions or ionic compounds, can be deflected or influenced to stop leaching downward through the soil by using magnetic fields, generated by an adequate DC frequency.

Alternating Currents (AC), governed by a transformer, can change direction in a timed interval, which can yield two different directions on a moving charge. "Alternating Voltages...means that the voltage in any wire changes from positive to negative and then back again regularly" (Holzner, page 87). Even though it may be easier to achieve polarity control with DC, it is postulated that nitrate (negative charge) could be both repelled and attracted by AC (James Robertson, RH20 Engineering). Furthermore, alternating current can travel much farther with no problem (it actually helps regenerate itself through alternating magnetic and electric fields). That's why power lines carry alternating current (Holzner, page 87). Due to the fact that an AC magnetic field moves quickly in two directions (back and forth), it is an interesting approach to study the relationship it may have with moving charges. When the current switches direction, it actually creates a propagating wave (a radio wave) that propagates outward (Dr. Daniel Fernandez, PhD Physics).

Furthermore, according to the Debye-Falkenhagen theory, when the time for one oscillation of an external alternating field is larger compared with the relaxation time of the ionic atmosphere, the latter will be in its asymmetric state, causing a retarding effect on the ion motion (Chighladze, Giorgi,_Estimation of change in soil water nitrate-nitrogen concentration using impedance spectra, Iowa State University, IA: ProQuest LLC, 2011, page 21).

In addition, at characteristic frequencies, the relaxation effect can totally disappear due to inability of ionic atmosphere to reach the asymmetric state. At these frequencies, the velocity of ions and their individual conductivities are significantly higher than ordinary frequencies. As a result contribution to the total ionic conductivity of the ion species, hence, their transportation number will change with frequency of the applied electric field (Chighladze, pages 21, 22). Interestingly, it has been estimated that the characteristic frequency of nitrate should be in the vicinity of 5MHz. At 5MHz, its movement is still retarded by an asymmetric ionic atmosphere (Chighladze, page 55). Although magnetic forces are a little trickier than electric fields, the same statistical effects should apply, and the magnetic fields and radio waves coming from an electric current can be involved in the parameters for the control of a moving charge. Therefore, an AC current, with the proper frequency of amps, volts, ohms (resistance), and frequency of radio waves (Hertz), is postulated to deflect or hold the downward movement of nitrate in the soil.

The Earth's magnetic field is maintained by the swirling motion of molten iron deep inside the Earth (Holzner, page 64), affecting every element on the planet to some degree. In addition, the Earth's magnetic field is only between 30 and 60 micro Tesla (µT means millionths of a Tesla), 30 µT at the equator and 60 µT at the poles. It is stronger at the poles because that is where all of the field lines are coming together. These considerations should be taken into account when configuring the proper power level needed to influence ions or other ionic compounds such as nitrate.

Furthermore, the movement of water through the soil must also be addressed, because different soil types (e.g., sand, silt, and clay) can cause changes in the velocity of water and the forces they impose on fertilizer particles, which may widen the range of the power level needed. In order to control the leaching of fertilizer, the forces exerted by gravity and moving water must be overcome by the forces induced by the application of electromagnetism.

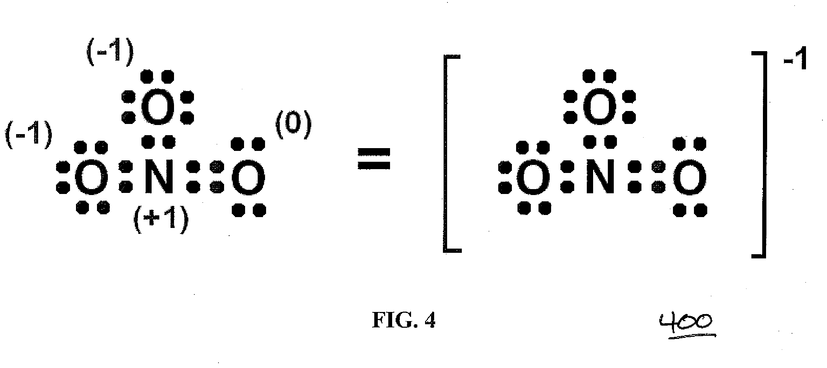

**FIG. 4** depicts the Lewis structure **400** of the nitrate ion. Nitrogen has 5 valence electrons, oxygen has 6, and we have 3 oxygen's, and we need to add 1, which gives us a total of 24 valence electrons. Nitrogen is the least electronegative; we can see that each of the oxygen's has 8 valence electrons, but nitrogen only has 6 valence electrons. The characterization of a molecule formed by nitrogen and oxygen, such as nitrate, as diamagnetic or paramagnetic can be characterized by methods known in the art.

All of the electrons are spin-paired in diamagnetic elements so their subshells are completed, causing them to be unaffected by magnetic fields. Conversely, paramagnetic elements are strongly affected by magnetic fields because their subshells are not completely filled with electrons. Nitrogen is a diamagnetic element, and oxygen is a paramagnetic element. Magnetic influence also depends upon the permeability of magnetic fields on a molecule or element.

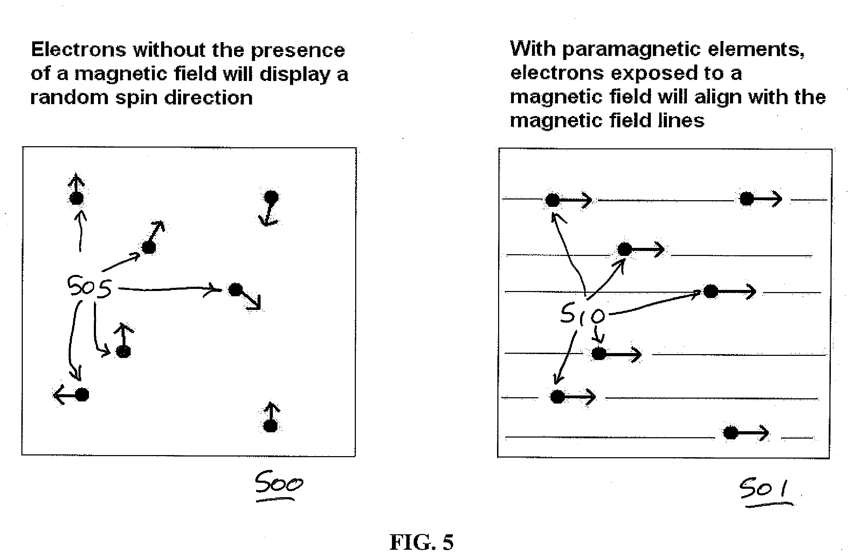

One form of control to stop a paramagnetic molecule from leaching is based on charge control, which would stem from the attraction of electrons to a high energy potential (i.e., voltage). When a paramagnetic element enters a strong magnetic field, the electrons align with the magnetic field lines, to give a secondary form of control. **FIG. 5** depicts an illustration **500** of this phenomenon. On the left side **500** of **FIG. 5****,** in the absence of a magnetic field, electrons, shown as black dots **505,** are not aligned (arrows are shown with random orientation). In contrast, as shown in the right side **501** of **FIG. 5****,** in a magnetic field, in the presence of an electric field, electrons **510** are aligned with the field.

Therefore, one purpose of the present invention is to separate ions or ionic compounds, such as nitrate, phosphate, sulfate or other fertilizers during the application of a fertilizer from the water that carries the fertilizer downward and allow the fertilizer enough time to attach itself to the films of water on the soil colloid (i.e. soil moisture).

In an embodiment, the male plugs and female copper connectors interconnect and snap into place after applying pressure against the flexible connectors (such as the rubber flex fits) at each end of the straight line connector pipes.

In an embodiment, vertically directed conductive wires descend from the straight line connector pipe in vertical pipe segments below the ground surface. In an embodiment, the vertical pipe segments descend 10 inches, although alternative embodiments contemplate other depths, such as 8 inches. in additional embodiments, the depth could be from about 4 inches to about 36 inches, in other embodiments from about 6 inches to about 24 inches, alternatively from about 8 inches to about 16 inches, or from about 10 inches to about 14 inches.

In an embodiment, conductive wires inside the vertical pipe segments descend to the bottom of the vertical pipe segment, then turn and ascend to the level of the Straight Line Connector pipes, forming vertical wire loops. Once at the level of the Straight Line Connector pipes, the conductive wires continue horizontally along the length of the Straight Line Connectors.

In an embodiment, the conductor wires within the vertical pipe segments are supported and held securely with support plugs; these plugs also help ensure the conductive wires do not electrically short together. In an embodiment, the conductive wire is formed of 10 gauge iron wire and the support plugs are formed from high-density plastic. Alternative embodiments contemplate the use of other conductive materials and diameters to form the conductive wires and other high-density non-conductive materials to form the support plugs.

In an embodiment, the vertical pipe segment is a moisture impermeable pipe and is permanently affixed to the Straight Line Connector pipe. In an embodiment, the moisture impermeable pipe is formed of 2 inch PVC pipe and the permanent fixation is formed by gluing with ABS glue. Alternative embodiments contemplate the use of other moisture-impermeable materials of different diameters for the pipe, and the use of alternative moisture-resistant fixations such as bonding, welding, or bolting.

In an embodiment, the vertical pipe segments are spaced along a Straight Line Connector with a spacing distance of 6 inches. Alternative embodiments contemplate using a spacing distance of 24 inches, or other distances dependant on the strength of the induced magnetic fields surrounding the vertical pipe segments. In other embodiments, spacing can be from about 6 inches to about 4 feet, in other embodiments, from about 8 inches to about 36 inches, in further embodiments, from about 12 inches to about 24 inches, and in additional embodiments, from about 16 inches to about 20 inches.

In an embodiment, the vertical pipe segments containing the embedded conductive wires are positioned and submerged beneath the soil with the gentle use of a rubber hammer, by tapping on top of the vertical pipe segment. In an embodiment, the top of the vertical pipe segment comprises a stopper that rests above the vertical pipe segment lead.

In certain embodiments, straight pipes can be spaced apart at as distance between about 12 inches to about 4 feet, in other embodiments from about 16 inches to about 36 inches, in further embodiments from about 20 inches to about 24 inches.

In an embodiment, the vertical wires are wrapped with copper wire. In a further embodiment, the copper wire is formed of 12 gauge wire, although other diameters are contemplated that induce the required magnetic field.

In an embodiment, an anti-oxidant coating such as Noalox® is applied to all conductive wires.

To measure the intensity of a magnetic field underground, one can use a Gauss meter. A Gauss meter can be used above ground to provide an estimate of magnetic field strength. In other embodiments, a probe can be attached to a Gauss meter and the probe inserted into the ground to measure magnetic field strength beneath the surface. Such probes can be used to measure field strength within the root zone of the plants in the bed.

Magnetic field strengths in the root zone can be in the range of about 10⁻⁶ Telsa (T) to about 1 T, alternatively from about 10⁻⁵ T to about 10⁻¹T, alternatively from about 10⁻⁴T to about 5 x 10⁻²T, still alternatively from about 10⁻³ T to about 10⁻² T.

Alternatively, magnetic field strength can be estimated by use of a piece of cardboard on the top of a magnet and apply a layer of black sand magnetite (Fe₃O₄). In the presence of a magnetic field, the magnetite will follow the lines of magnetic force and produce a visual indication of relative magnetic field strength.

In certain embodiments AC frequencies can be within the range of about 60 Hz to about 1 gigaHertz (GHz), alternatively about 600 Hz to about 100 megaHertz (MHz), alternatively about 5 MHz to about 50 MHz, alternatively. For nitrate, the frequency can be at about 50 MHz, for phosphate and sulfate, it can be in the range of about 50 MHz to about 1 GHz.

Voltage applied to a system can be in the range of about 1.0 V to about 100 V, alternatively from about 2 V to about 50 V, alternatively from about 5 V to about 30 V, alternatively form about 10 V to about 20 V.

A power supply can be regulated so that the power delivered can be in the range of from about 10⁻² A to about 15 A, alternatively form about 10⁻¹ A to about 10 A, in other embodiments from about 5 x 10⁻¹ A to about 5 A, alternatively from about 1 A to about 2A.

### EXAMPLES

The follow examples illustrate some specific embodiments, and are not intended to limit the scope of the invention. Rather, persons of skill in the art can produce other embodiments without undue experimentation and with a likelihood of success. All such embodiments are considered to be within the scope of this invention.

### Example 1: Cylindrical Conductor

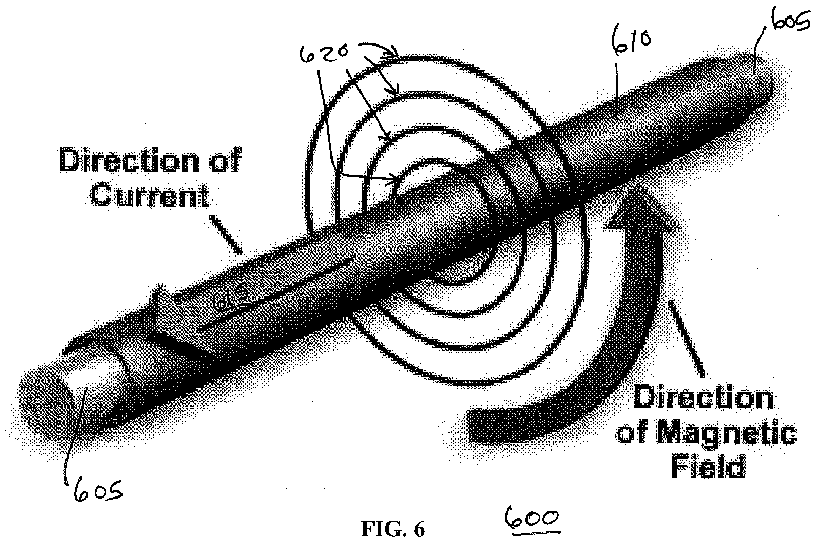

**FIG. 6** depicts an embodiment of a device **600** for creating a magnetic field using electric current through a conductor. Cylindrical conductor (inner column) **605** is surrounded by insulator **610.** Electric current **615** flows through conductor **605,** producing circumferential magnetic field lines **620** induced by current **615.**

### Example 2: Toroidal Conductor

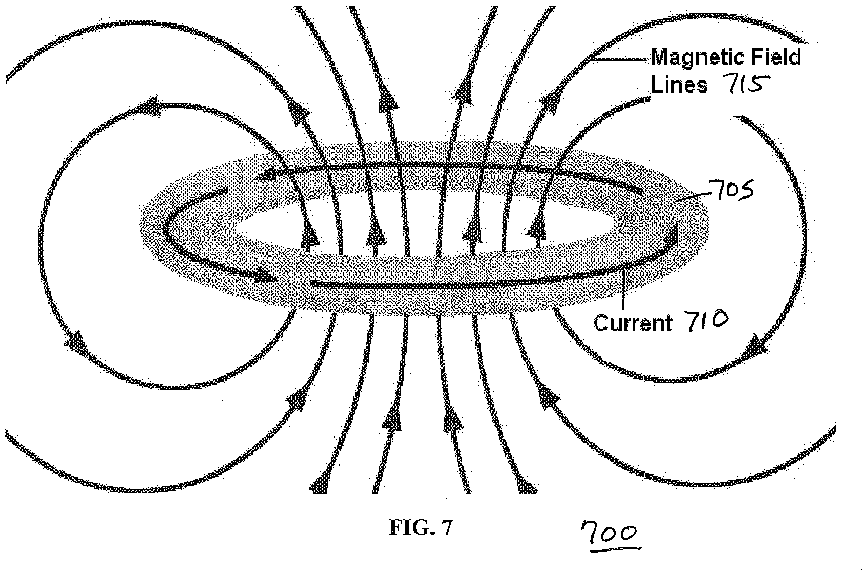

**FIG. 7** depicts an alternative embodiment **700** in which conductive material **705** is in the form of a torus (doughnut). Electric current **710** flows through conductor **705,** producing magnetic field lines **715** induced by current **705.**

As shown in **FIG. 7****,** a vertical center line represents a vertical conductor placed within a moisture impermeable pipe, carrying an electromagnetic current. The elliptical lines represent the direction of the magnetic field lines and the force on ions or ionic compounds, such as nitrate, during the application of fertilizer delivered within the pipe.

In an embodiment, the vertical conductor is formed of 10 gauge iron wire and the pipe is formed of one-inch PVC pipe. In alternative embodiments, the design may include other conductive materials and may be different in diameter, and pipes may include alternative moisture impermeable materials and diameters, such as a rubber hose casing to replace the PVC.

Electric charges in motion form a current, and various arrangements of electric current create different magnetic fields (Holzner page 11). Alternate embodiments comprise bent wires having different shapes (doughnuts, vertical or horizontal loops, side by side lines with the same direction, side by side lines in the opposite direction, etc), since these configurations may create different magnetic force directions and different power levels by doubling them up.

A magnetic field, which is measured in Gausses or Tesla units (Holzner, page 66), wraps around the center of the wire in circular loops, decreasing in magnitude with increasing distance from the wire (Boston University, Magnetic Fields and how to make them).

A further embodiment comprises wrapping iron wire with coils of copper wire, which may result in creating a strong electromagnet. Moreover, since magnetism is stronger when a magnet is cooled at low temperatures, alternative embodiments comprise cooling down the soil or simply using cold water temperatures from about 0°C to about 10°C to strengthen the magnetic forces.

### Example 3: Implementation in a 40" Bed

On an average 40" bed volume of soil, about 260 square inches are available to work with when determining field placement and flux. Magnetic flux is magnetic field times the area, so it consists of two pieces, the size of the magnetic field and the size of the area in which it is acting.

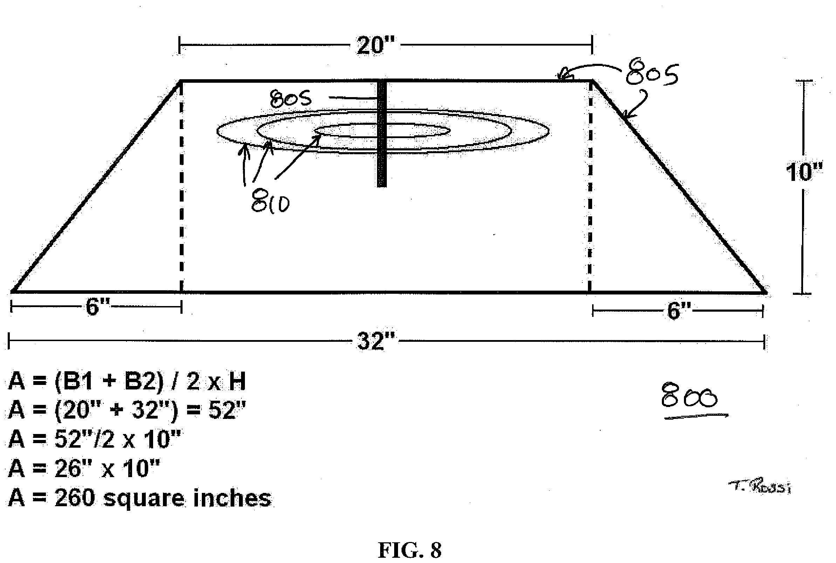

**FIG. 8** illustrates an embodiment **800** according to the present invention on a 40" bed. This embodiment comprises using electrically conductive wire **805.** In an embodiment, conductive wire **805** (represented by the vertical and horizontal straight lines and vertical hashed lines), are run through a moisture impermeable pipe (not shown) Electrical current flowing through the conductive wire **805** produces magnetic field lines **810.** The conductive wire 805 is insulated by PVC pipe or hose for field safety and to avoid a short circuit (since conductive wires cannot have direct contact with irrigation water). There are 4 inches that are not shown on each side of the trapezoid depicted in **FIG. 8****,** and represents the center of the furrow and factors into the measurements of a 40" bed.

### Example 4: Installation with Moisture Impermeable Pipes and Loops

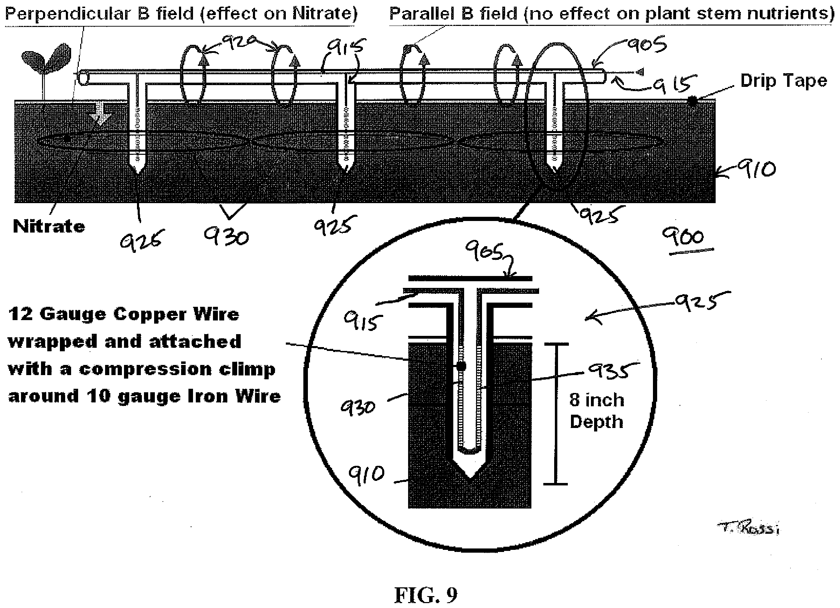

**FIG. 9** (top portion) depicts an embodiment **900,** having horizontal straight pipe segments **905** (Straight Line Connectors, defined below), arranged above bed **910.** Conductive wire **915** within the horizontal pipe segments **905** is formed of 10 gauge iron wire, and the moisture impermeable pipe segments **905** are formed of one inch PVC pipe. Electrical current running through conductive wire **915** produces magnetic field lines **920** both in the horizontal wire and in wires descending into vertical PVC pipe segments **925.** Electrical current running through vertical PVC pipe segments **925** produces magnetic field lines **930** within bed **910.** In alternative embodiments, conductive materials may include aluminium and may be different diameter, and pipes may include alternative moisture impermeable materials and diameters.

**FIG 9** (bottom portion) depicts a blow-up view of vertical PVC pipe segment **925,** showing horizontal PVC pipe segment **905,** conductive wire **915,** descending conductive wire **930** and ascending conductive wire **935.**

**FIG. 9** also shows permanent installations of moisture-impermeable pipe at the ends of the field, which travel beneath the furrow and then rise to the bed top where they can be connected with connectors (Underground Loop Connectors) to Straight Line Connectors (defined below). In an embodiment, the pipe is formed of one inch PVC pipe and the depth beneath the furrow is below a 14" sub-furrow line (see Diagram X). Alternative embodiments contemplate the use of other moisture-impermeable materials and diameters, and other depths beneath the furrow.

Connected to horizontal straight pipe segments **905** are shown three vertical pipe segments **925,** inserted into bed **910** and comprising vertical moisture-impermeable pipes that contain vertically descending **930** and ascending **935** conductive wire (vertical loops, defined below). In the vertical wire loops, the vertical, the portions of descending conductive wire **930** and ascending conductive wire **935** that are located under the top surface of bed **910** represent areas where iron wire is wrapped with copper wire to increase the size of the magnetic field, which increases the distance between the vertical wire loops and decreases the number of vertical wire loops needed. Also shown is drip tape **940.**

The conductive wire in the vertical wire loops is chosen to safely conduct 10 amps of current while managing the amount of heat generated. An embodiment uses 10 gauge iron and 12 gauge copper wire, although alternative embodiments are contemplated due to differences in types of soil: different power levels are needed. Managing heat during conduction is desirable to minimize condensation (i.e., sweating) within the pipe.

A further embodiment may add a coating to protect the iron and copper wires from oxidation, such as by thoroughly applying an anti-oxidant such as "Noalox ®" to all iron and copper surfaces.

To keep the above ground magnetic fields small, an embodiment according to the present invention comprises not wrapping copper wire around the horizontal wire and any portion of the wire that is above ground.

### Example 5: Large Scale Implementation

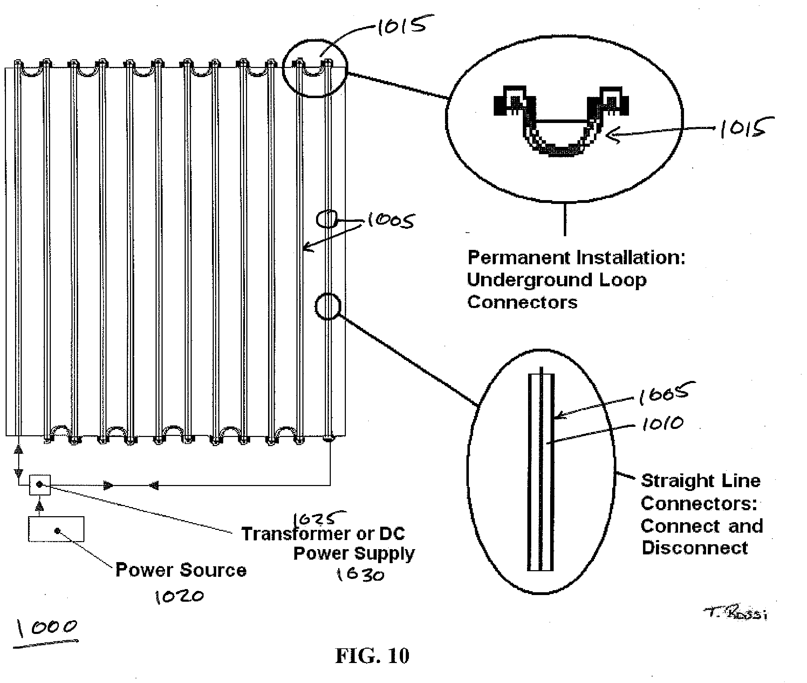

**FIG. 10** depicts an aerial view of an embodiment **1000** of underground loop connectors and straight line pipes **1005** on a one acre field set-up on 12 beds. Straight line pipes **1005** are shown having conductors **1010,** underground loop connectors **1015,** power source **1020,** and a transformer **1025** or a DC power supply **1030.**

Power source **1020** produces 10 amps (A) of electric current, which passes through conductive wire **1010,** such as 10 gauge iron wire without copper. Another embodiment induces 10 amps of electricity through iron wire wrapped with copper. Further alternative embodiments may induce a range of currents below 10 amps, such as between 5 A and 10 A, because copper wires reduces the power needed, or or increases the size of the magnetic field. In alternative embodiments, the conductive wire may be different diameter, of from 1 gauge to 20 gauge, 2 gauge to 15 gauge, 5 gauge to 10 gauge.

In an alternative embodiment, stacking or aligning adjacent magnetic fields next to each other will further increase the size of the magnetic field, thereby producing a bigger field to encompass the fertilizer.

Another alternative embodiment comprises Radio Frequency (RF) shielding of the horizontal wire, to reduce the size of the magnetic field above the ground level. Another alternative embodiment comprises triangulating 3 wires and positioning them close to each other, so that the cancel out the magnetic fields.

### Example 6: Large Scale Implementation II

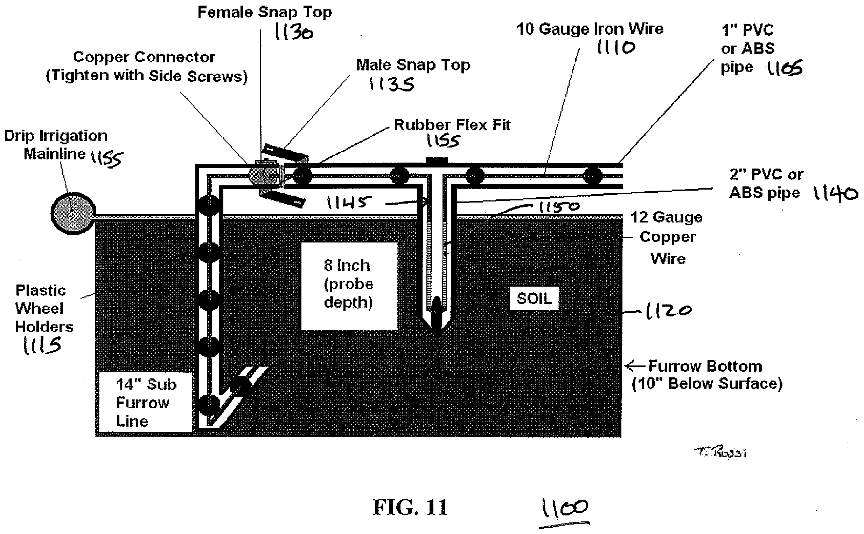

**FIG. 11** depicts an embodiment **1100,** in which an array of straight line pipes **1105** have wires **1110,** held by wheels **1115** of high-density plastic, and fixation of the segments **1105** formed using ABS glue. The array is placed on the top-center of bed **1120.** Straight line connectors **1105** can then be added after a global positioning system GPS lister makes the beds. Vertical PVC pipe segments **1140** with descending and ascending conductive wires **1145** and **1150,** respectively, are shown.

Protective end-caps (not shown), such as a rubber caps or "flex-fits," are added to the ends of the straight line connector pipes **1105** when they are not connected, to ensure the metal parts of the system do not oxidize with weathering. During field operations and after harvest, the straight line connectors **1105** can be disconnected and stored in a secure area when they are not in use. In an embodiment, the end-caps are formed of rubber, although alternative embodiments using other flexible, weather and moisture-resistant materials are contemplated.

In these embodiments, fixation comprises a female snap trap **1030,** a male snap trap **1035,** or a rubber flex fit **1055** or an adhesive such as ABS glue. Alternative embodiments contemplate the use of other high-density nonconductive materials for the plugs, and bonding, welding, or bolting for the fixations. Also shown is drip irrigation mainline **1055,** and the underground segments are shown at a depth of about 10" below ground level.

Individual units are built and assembled individually to match the length of run for the field. Before connecting the straight line connectors **1105** to permanent underground loop connectors, all units are assembled above ground to extend the length of a 40" bed. Different lengths of Straight Line Connectors may be created to perfectly fit the bed.

Also, as shown in **FIG. 11****,** an embodiment of the Straight Line Connectors comprises a moisture-impermeable pipe, which contains an electrically conductive wire, as vertical and horizontal straight lines within the PVC pipe. In an embodiment, the moisture-impermeable pipe is formed of one inch PVC pipe and the conductive wire is formed of single 10 gauge iron wire. Alternative embodiments contemplate the use of alternative moisture-impermeable materials and diameters for the pipe, and alternative conductive materials and diameters for the conductive wire.

### Example 7: Alternative Embodiment of Straight Line Connector.

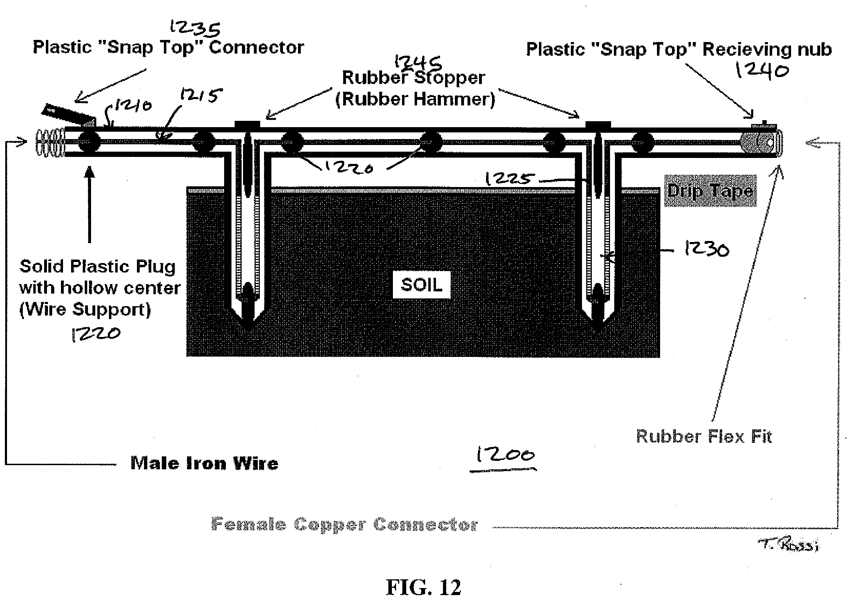

**FIG. 12** depicts an alternative embodiment **1200** of a straight line connector **1205** comprising pipe **1210,** having conductor **1215** therein, and having conductor supports **1220,** descending conductive wire **1225** and ascending conducting wire **1230,** respectively, male snap top connector **1235,** female snap top receiving end **1240,** and rubber stoppers **1245** inserted between descending and ascending loops **1225.**

In an embodiment, the male snap top connector **1235** is formed of 10 gauge iron and the female connector **1240** is a female copper connector, although the use of alternative conductive materials and diameters is contemplated.

### Example 8: Alternative Female Connector

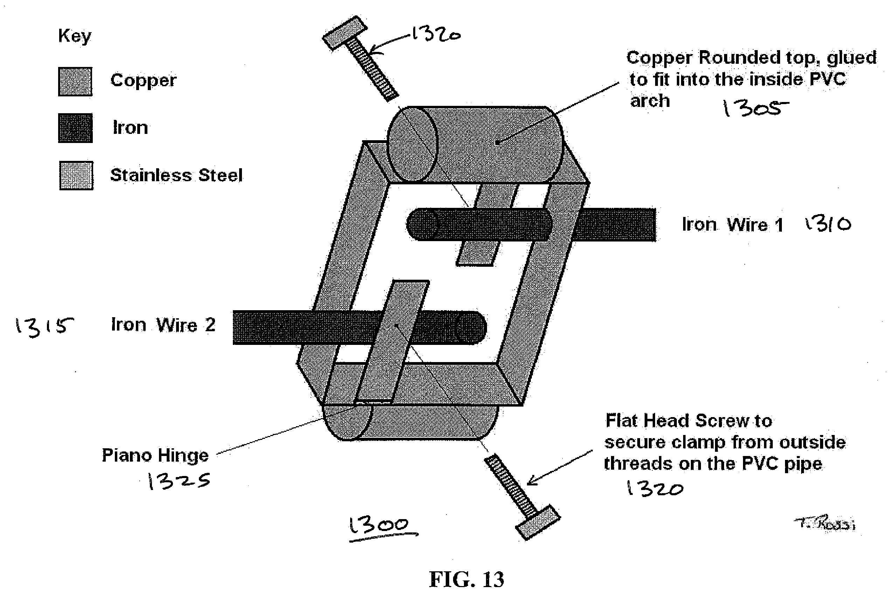

**FIG. 13** depicts an alternative embodiment **1300** of a female connector showing female copper connectors **1305** soldered together into the shape of a square. Iron wire 1 **1310** and iron wire 2 **1315** are depicted, as are stainless steel flat head screws **1320** to hold wires **1310** and **1315** in electrical contact with copper connectors **1305.** Plano hinge **1325** is also shown. Alternative embodiments contemplate the use of other methods of forming such as by extrusion, and other shapes such as rounded squares, circles, or other shapes can also be made and used.

### Example 9: Electrical Conductivity of Nitrate Fertilizer.

Purpose: To assess whether or not nitrogen based fertilizers are conductive to electricity and to visually evaluate brightness, so as to give each of them a general grade (low-medium-high).

### Materials:

1. Quantity: 9, 12 ounce clear plastic cups.
2. Quantity: 3 six inch pieces of 24 gauge copper wire.
3. Quantity: 1, 5mm Red LED light (2.6 volt, 28mA, 10mcd).
4. Quantity: 1 AA Battery.
5. Roll of Electrical Tape.
6. Small alligator clips (Conductive).
7. Liquid Fertilizers: 12-0-0-26s, 10-34-0, AN20, UAN 32, CN9.
8. Other liquids: Bottled Water (Control), Tap Water, Distilled Water, and Salt Water (bottled water mixed with Sodium Chloride).

### Procedure:

1. Cut three 6 inch pieces of 24 gauge copper wire.
2. Placed the first piece of wire into a plastic cup with a 90 degree angle bend about 1 inch long, so that it ran parallel to the bottom of the cup and is about ½ inch away from the bottom of the cup. Bent the other end of the wire over the top of the cup and secured with electrical tape inside the cup.
3. Placed the second piece of wire into the cup and repeated step two, producing two 90 degree angle wires facing each other at the bottom of the cup in a straight line, with about 1 inch distance of space between them. Secured the second wire to the inside top of the cup with electrical tape.
4. Attached the end of the first piece of wire (outside of the cup) to the negative side of one AA battery with electrical tape.
5. Used the third piece of copper wire and attached it to the positive side of the AA battery with electrical tape.
6. Attached the positive side of the LED light to the end of the second piece of wire with electrical tape or small alligator clips.
7. Poured the testing substance into the cup so that the two 90 degree angled wires were completely submerged in liquid.
8. Turned off the lights in the room and touched the free end of the third piece of wire to the negative cathode (short lead) LED light. Determined conductive results by viewing the strength of brightness of the LED.
9. Used a new cup for each fertilizer or water source that was tested.

### Results:

Results are expressed below in **Table 1.**

**Table 1**

| Liquid Tested | Did it conduct? | LED Brightness |
|---|---|---|
| 12-0-0-26s (Ammonium Thiosulfate) | Yes | Very High |
| 10-34-0 (Ammonium Polyphosphate) | Yes | High |
| UAN 32 (Urea Ammonium Nitrate) | Yes | Medium |
| AN20 (Ammonium Nitrate 20%) | Yes | Medium |
| CN 9 (Calcium Nitrate) | Yes | Low |
| Salt water | Yes | Low |
| Tap Water | Yes | Very Low |
| Bottled Water (Control) | No | None |
| Distilled water | No | None |

### Pictures

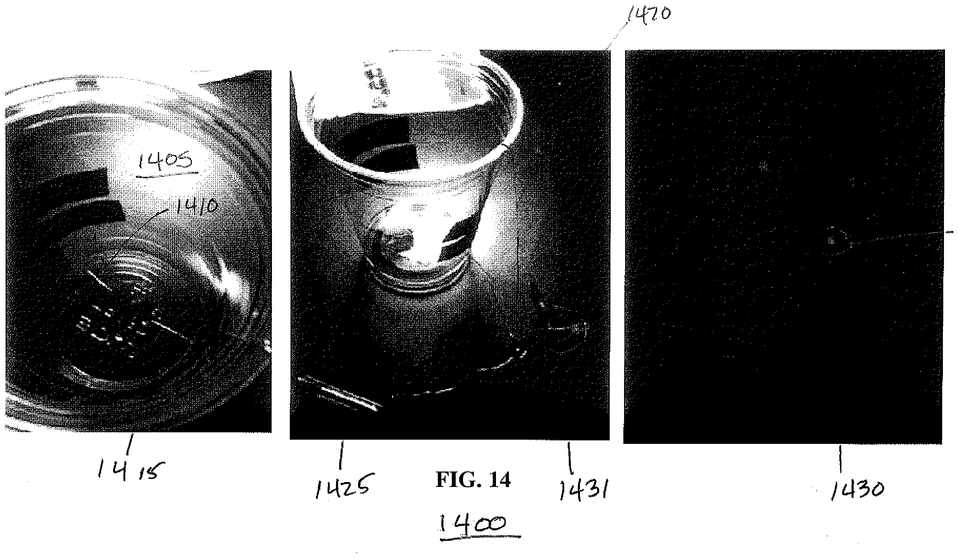

Photographs of the experiment are shown in **FIG. 14****.** The left panel of **FIG. 14** shows a top view of a cup **1405** used for testing, with wires **1410** and **1415** attached to the bottom of the cup and secured with electrical tape to the insides of the cup. Note that there is about 1" of free space between the wires, so wires are not connected.

The middle panel of **FIG. 14** shows an oblique view of a cup **1405** that contains 10-34-0 liquid fertilizer, which was used for conductive testing. Wire **1420** inside the cup, which folded over the top of the cup and extended down the outside of the cup, was connected to the negative side of a single AA battery **1425.** A small piece of wire was then added to the positive side of the AA battery, which was used to touch the positive side of the LED light **1431** and created a glow (confirming conduction). The other wire that exited the cup was connected to the negative lead of the LED light.

The right panel of **FIG. 14** depicts the completion of a closed circuit and confirmed electrical conduction through the solution containing fertilizer. The LED red glow **1430** confirmed that a current was conducted through the 10-34-0 (Ammonium Polyphosphate) fertilizer, acting as a conductor between the wires that were inside of the cup.

Notable Observations: When pouring more of the same fertilizer into the test cup, the LED light grew intensely brighter for a period of a few seconds before dimming back down to its original brightness reading. Stirring the fertilizer also temporarily increased light intensity.

Summary of Results: I confirmed that all nitrogen based fertilizers used in this experiment were conductors of electricity. Because we are dealing with electrolytes as nitrates, or other anionic fertilizers, it makes sense that they are highly soluble and will conduct a current quite well in solution.

### Conclusions:

Because fertilizers conduct electricity, I conclude that the electron movement within the medium can be influenced by a magnetic field. I further conclude from this study that using electric currents to produce magnetic fields within a bed can interact with ionic fertilizers, including nitrates, thiosulfates, and polyphosphates, and retain them near the root systems of plants growing in the beds. I further conclude that using embodiments of this invention can reduce leaching of ionic fertilizers, including nitrates, thiosulfates, and polyphosphates, and thereby reduce the need for application of such fertilizers, reduce environmental groundwater and run-off contamination, and reduce the cost of plants grown using the described methods and systems.

## Claims

1. A device for producing a magnetic field within an agricultural bed (910, 1120), comprising:
an first insulated pipe segment having generally curved, closed side wall enclosing a space therein having central axis, an open end, and a closed end;
said, space having within it:
an electrically conductive first elongated element having a first end and a second end,
a second elongated electrically conductive element having a first end and a second end; .
each of said second ends within said space near said closed end being electrically connected to each other, forming an electrically conductive loop within said closed end, said first end of said first elongated element and said first end of said second element having electrically conductive portions extending through said open end of said pipe segment, said first elongated element and said second elongated element being separated within said space except for the electrically conductive loop;
said first end of said first conductive element adapted to be connected to an anode of source of electric power,
said first end of said second conductive element being adapted to be connected to a cathode of said source of electric power.

2. The device of Claim 1, further comprising:
a insulated straight line connector pipe segment (905, 1105) having a generally curved closed side wall enclosing a space therein having a central axis and two ends, said sidewall having an opening therethrough, said space having a first and a second elongated conductive element therein generally parallel to said central axis;
said open end of said first insulated pipe segment of Claim 1 being sealingly attached to said insulated straight line connector pipe segment (905, 1105), said central axis of said first pipe segment being at an angle with respect to said central axis of said insulated straight line connector pipe segment (905, 1105), so that said first elongated pipe segment of Claim 1 becomes a vertical pipe segment (925), where the space of said vertical pipe segment (925) is in continuity with said space of said straight line connector pipe segment (905, 1105), said first end of said first electrically conductive elongated element of said vertical pipe segment (925) is electrically connected to a first conductive elongated element within said space of said insulated straight line connector pipe segment (905, 1105), said second end of said first electrically conductive elongated element of said vertical pipe segment (925) being electrically connected to a second conductive elongated element with said insulated straight line connector pipe segment (905, 1105); and
said first and second conductive elongated elements within said straight line connector pipe segment (905, 1105) extending through said open ends of said straight line connector pipe segment (905, 1105).

3. The device of Claim 2, further comprising a power source (1020) electrically connected to said first and second conductive elongated elements extending from said open ends of said straight line connector pipe segment (905, 1105).

4. The device of Claim 3, said power source (1020) being an alternating current (AC) source or a direct current (DC) source.

5. The device of Claim 3, further comprising a plurality of vertical pipe segments (925) attached to said straight line connector pipe segment (905, 1105).

6. The device of Claim 5, each of said vertical pipe segments (925) having a length in the range of about 4 inches to about 36 inches, said vertical pipe segments (925) are spaced apart on said straight line connector pipe segment segment (905, 1105). with a spacing of about 6 inches to about 4 feet, thereby forming a linear array of vertical pipe segments (925) attached to a straight line connector pipe segment (905, 1105). thereby producing a one- dimensional array of vertical pipe segments.

7. The device of Claim 6, further comprising a plurality of additional vertical pipe segments (925) arranged generally, in parallel to each other, each of said straight line connector pipe segments segment (905, 1105). being electrically connected to each other in series with said power source (1020) and having a lateral spacing in the range of about 12 inches to about 4 feet, thereby forming a two-dimensional array of vertical pipe segments (925).

8. A method for reducing leaching of an ionic fertilizer into ground water, comprising: providing a device of Claim 1;
inserting said device into a bed (910, 1120) of soil; connecting said device to a source (1020) of electrical power; and causing an electrical current to flow through said loop, thereby producing a magnetic field with magnetic field lines (230, 250) generally oriented at right angles to said central axis of said device.

9. A method for reducing leaching of an ionic fertilizer into ground water, comprising:
providing a device of Claim 7;
inserting the vertical segments (925) of said device into a bed (910, 1120) of soil;
connecting said device to a source (1020) of electrical power; and
causing an electrical current to flow through at least one of said plurality of loops, thereby producing at least one magnetic field with magnetic field lines (230, 250) generally oriented at right angles to said central axis of said at least one of said vertical pipes (925).

10. The method of Claim 9, where said source (1020) of electrical power is an alternating current (AC) source, operating at:
a voltage of from about 1.0 Volt (V) to about 100 V,
a frequency of from about 60 Hertz (Hz) to about 1 gigaHertz (GHz), and
a power of from about 10⁻² Amperes (A) to about 15 A.

11. The method of Claim 9, where the magnetic field strength of at least one of said plurality of magnetic fields, is in the range of about 10⁻⁶ Tesla (T) to about 1.0 T.

12. The method of Claim 11, said magnetic field strength of at least one of said plurality of magnetic fields is measured using a Gauss meter.

13. The method of Claim 12, said Gauss meter comprising either:
a generally planar sensor and detects the magnetic field strength above the surface of said bed (910, 1120); or
a probe inserted into the bed (910, 1120) of soil to measure magnetic field strength under the surface of said bed (910, 1120).

14. The method of Claim 11, said magnetic field strength being estimated at the surface of said bed (910, 1120) of soil using a piece of non-conductive material having a later of black sand magnetite (Fe:,0.i) thereon.

15. The method of Claim 11, said ionic fertilizer selected from either:
the group of nitrates, phosphates, and sulfates; or
the group consisting of ammonium thiosulfate (12-0-0-26s), ammonium polyphosphate (10-34-0), urea ammonium nitrate (UAN 32), ammonium nitrate 20% (AN20), and calcium nitrate (CN9).

## Patentansprüche

1. Vorrichtung zum Erzeugen eines Magnetfelds in einem landwirtschaftlichen Boden (910, 1120), umfassend:
ein erstes isoliertes Rohrsegment mit einer im Allgemeinen gekrümmten, geschlossenen Seitenwand, die darin einen Raum umschließt, der eine Mittelachse, ein offenes Ende und ein geschlossenes Ende aufweist;
wobei der Raum im Inneren Folgendes aufweist:
ein elektrisch leitendes erstes längliches Element mit einem ersten Ende und einem zweiten Ende,
ein zweites längliches, elektrisch leitendes Element mit einem ersten Ende und einem zweiten Ende;
wobei jedes der zweiten Enden in dem Raum nahe dem geschlossenen Ende elektrisch miteinander verbunden ist und eine elektrisch leitende Schleife innerhalb des geschlossenen Endes bildet, wobei das erste Ende des ersten länglichen Elements und das erste Ende des zweiten Elements elektrisch leitende Abschnitte aufweisen, die sich durch das offene Ende des Rohrsegments erstrecken, wobei das erste längliche Element und das zweite längliche Element in dem Raum abgesehen von der elektrisch leitenden Schleife getrennt sind;
das erste Ende des ersten leitenden Elements angepasst ist, um mit einer Anode einer elektrischen Energiequelle verbunden zu werden,
wobei das erste Ende des zweiten leitenden Elements angepasst ist, um mit einer Kathode der elektrischen Energiequelle verbunden zu werden.

2. Vorrichtung nach Anspruch 1, ferner umfassend:
ein isoliertes geradliniges Verbindungsrohrsegment (905, 1105) mit einer im Allgemeinen gekrümmten, geschlossenen Seitenwand, die darin einen Raum umschließt, der eine Mittelachse und zwei Enden aufweist, wobei die Seitenwand eine Öffnung hindurch aufweist, wobei der Raum ein erstes und ein zweites längliches leitendes Element darin im Allgemeinen parallel zu der Mittelachse aufweist;
wobei das offene Ende des ersten isolierten Rohrsegments nach Anspruch 1 abdichtend an dem isolierten geradlinigen Verbindungsrohrsegment (905, 1105) angebracht ist, wobei sich die Mittelachse des ersten Rohrsegments in einem Winkel in Bezug auf die Mittelachse des isolierten geradlinigen Verbindungsrohrsegments (905, 1105) befindet, sodass das erste längliche Rohrsegment nach Anspruch 1 zu einem vertikalen Rohrsegment (925) wird, wo der Raum des vertikalen Rohrsegments (925) in Fortsetzung mit dem Raum des geradlinigen Verbindungsrohrsegments (905, 1105) ist,
das erste Ende des ersten elektrisch leitenden länglichen Elements des vertikalen Rohrsegments (925) elektrisch mit einem ersten leitenden länglichen Element innerhalb des Raums des isolierten geradlinigen Verbindungsrohrsegments (905, 1105) verbunden ist,
wobei das zweite Ende des ersten elektrisch leitenden Elements des vertikalen Rohrsegments (925) elektrisch mit einem zweiten leitenden länglichen Element mit dem isolierten geradlinigen Verbindungsrohrsegment (905, 1105) verbunden ist und
sich das erste und zweite leitende längliche Element innerhalb des geradlinigen Verbindungsrohrsegments (905, 1105) durch die offenen Enden des geradlinigen Verbindungsrohrsegments (905, 1105) erstrecken.

3. Vorrichtung nach Anspruch 2, ferner umfassend eine Energiequelle (1020), die elektrisch mit dem ersten und zweiten leitenden länglichen Element verbunden ist, die sich von den offenen Enden des geradlinigen Verbindungsrohrsegments (905, 1105) erstrecken.

4. Vorrichtung nach Anspruch 3, wobei die Energiequelle (1020) eine Wechselstromquelle (AC) oder eine Gleichstromquelle (DC) ist.

5. Vorrichtung nach Anspruch 3, ferner umfassend eine Vielzahl von vertikalen Rohrsegmenten (925), die an dem geradlinigen Verbindungsrohrsegment (905, 1105) angebracht sind.

6. Vorrichtung nach Anspruch 5, wobei jedes der vertikalen Rohrsegmente (925) eine Länge in dem Bereich von etwa 4 Zoll bis etwa 36 Zoll aufweist, die vertikalen Rohrsegmente (925) auf dem geradlinigen Verbindungsrohrsegment (905, 1105) mit einem Abstand von etwa 6 Zoll bis etwa 4 Fuß (48 Zoll) beabstandet sind, und dadurch eine lineare Anordnung von vertikalen Rohrsegmenten (925) bilden, die an dem geradlinigen Verbindungsrohrsegment (905, 1105) angebracht sind, und dadurch eine eindimensionale Anordnung von vertikalen Rohrsegmenten erzeugen.

7. Vorrichtung nach Anspruch 6, ferner umfassend eine Vielzahl von zusätzlichen vertikalen Rohrsegmenten (925), die im Allgemeinen parallel zueinander angeordnet sind, wobei die geradlinigen Verbindungsrohrsegmente (905, 1105) jeweils elektrisch miteinander in Reihe mit der Energiequelle (1020) verbunden sind und einen lateralen Abstand in dem Bereich von etwa 12 Zoll bis etwa 4 Fuß (48 Zoll) aufweisen, und dadurch eine zweidimensionale Anordnung von vertikalen Rohrsegmenten (925) bilden.

8. Verfahren zum Reduzieren eines Versickerns eines ionischen Düngemittels in das Grundwasser, umfassend:
Bereitstellen einer Vorrichtung nach Anspruch 1;
Einsetzen der Vorrichtung in einen Erdboden (910, 1120);
Verbinden der Vorrichtung mit einer elektrischen Energiequelle (1020); und
Veranlassen, dass ein elektrischer Strom durch die Schleife fließt, wodurch ein Magnetfeld mit Magnetfeldlinien (230, 250) erzeugt wird, die im Allgemeinen im rechten Winkel zu der Mittelachse der Vorrichtung ausgerichtet sind.

9. Verfahren zum Reduzieren einer Versickerung eines ionischen Düngemittels in das Grundwasser, umfassend:
Bereitstellen einer Vorrichtung nach Anspruch 7;
Einsetzen des vertikalen Segments (925) der Vorrichtung in einen Erdboden (910, 1120);
Verbinden der Vorrichtung mit einer elektrischen Energiequelle (1020); und
Veranlassen, dass ein elektrischer Strom durch mindestens eine der Vielzahl von Schleifen fließt, und dadurch mindestens ein Magnetfeld mit Magnetfeldlinien (230, 250) erzeugt wird, die im Allgemeinen im rechten Winkel zu der Mittelachse des mindestens einen der vertikalen Rohre (925) ausgerichtet sind.

10. Verfahren nach Anspruch 9, bei dem die elektrische Energiequelle (1020) eine Wechselstromquelle (AC) ist, die bei Folgendem betrieben wird:
einer Spannung von etwa 1,0 Volt (V) bis etwa 100 V,
einer Frequenz von etwa 60 Hertz (Hz) bis etwa 1 Gigahertz (GHz); und
einer Energie von etwa 10⁻² Ampere (A) bis etwa 15 A.

11. Verfahren nach Anspruch 9, bei dem die Magnetfeldstärke von mindestens einem der Vielzahl von Magnetfeldern in dem Bereich von etwa 10⁻⁶ Tesla (T) bis etwa 1,0 T ist.

12. Verfahren nach Anspruch 11, wobei die Magnetfeldstärke von mindestens einem der Vielzahl von Magnetfeldern unter Verwendung eines Gaussmeters gemessen wird.

13. Verfahren nach Anspruch 12, wobei das Gaussmeter Folgendes umfasst:
einen im Allgemeinen planaren Sensor und erfasst die Magnetfeldstärke über der Oberfläche des Bodens (910, 1120); oder
eine Sonde, die in den Erdboden (910, 1120) eingesetzt ist, um eine Magnetfeldstärke unter der Oberfläche des Bodens (910, 1120) zu messen.

14. Verfahren nach Anspruch 11, wobei die Magnetfeldstärke an der Oberfläche des Erdbodens (910, 1120) unter Verwendung eines Stücks von nichtleitendem Material geschätzt wird, auf dem sich eine Schicht eines schwarzen Magnetitsands (Fe:,0.i) befindet.

15. Verfahren nach Anspruch 11, wobei das ionische Düngemittel aus Folgendem ausgewählt ist:
der Gruppe von Nitraten, Phosphaten und Sulfaten; oder
der Gruppe bestehend aus Ammoniumthiosulfat (12-0-0-26s), Ammoniumpolyphosphat (10-34-0), Harnstoffammoniumnitrat (UAN 32), Ammoniumnitrat 20% (AN20) und Calciumnitrat (CN9).

## Revendications

1. Dispositif de production d'un champ magnétique dans un lit agricole (910, 1120), comprenant :
un premier segment de tuyau isolé présentant une paroi latérale fermée généralement incurvée renfermant un espace à l'intérieur de celui-ci comportant un axe central, une extrémité ouverte et une extrémité fermée ;
ledit espace comportant à l'intérieur de celui-ci :
un premier élément électriquement conducteur allongé présentant une première extrémité et une deuxième extrémité ;
un deuxième élément allongé électriquement conducteur présentant une première extrémité et une deuxième extrémité ;
chacune desdites deuxièmes extrémités à l'intérieur dudit espace près de ladite extrémité fermée étant électriquement connectée l'une à l'autre, formant une boucle électriquement conductrice à l'intérieur de ladite extrémité fermée, ladite première extrémité dudit premier élément allongé et ladite première extrémité dudit deuxième élément présentant des parties électriquement conductrices à travers ladite extrémité ouverte dudit segment de tuyau, ledit premier élément allongé et ledit deuxième élément allongé étant séparés à l'intérieur dudit espace à l'exception de la boucle électriquement conductrice ;
ladite première extrémité dudit premier élément conducteur conçue pour être connectée à une anode de la source d'énergie électrique,
ladite première extrémité dudit deuxième élément conducteur étant conçue pour être connectée à une cathode de ladite source d'énergie électrique.

2. Dispositif selon la revendication 1, comprenant en outre :
un segment de ligne droite de tuyau de raccordement isolé (905, 1105) présentant une paroi latérale fermée généralement incurvée renfermant un espace à l'intérieur de celui-ci comportant un axe central et deux extrémités, ladite paroi latérale présentant une ouverture à travers celle-ci, ledit espace présentant des premier et deuxième éléments conducteurs allongés à l'intérieur de celui-ci généralement parallèles audit axe central ;
ladite extrémité ouverte dudit premier segment de tuyau isolé selon la revendication 1 étant fixé de manière hermétique audit segment de ligne droite de tuyau de raccordement isolé (905, 1105), ledit axe central dudit premier segment de tuyau étant situé à un angle par rapport audit axe central dudit segment de ligne droite de tuyau de raccordement isolé (905, 1105), de manière que ledit premier segment de tuyau allongé de la revendication 1 devient un segment de tuyau vertical (925), où l'espace dudit segment de tuyau vertical (925) est en continuité avec ledit espace dudit segment de ligne droite de tuyau de raccordement isolé (905, 1105), ladite première extrémité dudit premier élément allongé électriquement conducteur dudit segment de tuyau vertical (925) est électriquement connecté à un premier élément allongé conducteur à l'intérieur dudit espace dudit segment de ligne droite de tuyau de raccordement isolé (905, 1105), ladite deuxième extrémité dudit premier élément allongé électriquement conducteur dudit segment de tuyau vertical (925) étant électriquement connectée à un deuxième élément allongé conducteur avec ledit segment de ligne droite de tuyau de raccordement isolé (905, 1105) ; et lesdits premier et deuxième éléments allongés conducteurs à l'intérieur dudit segment de ligne droite de tuyau de raccordement isolé (905, 1105) s'étendant à travers lesdites extrémités ouvertes dudit segment de ligne droite de tuyau de raccordement isolé (905, 1105).

3. Dispositif selon la revendication 2, comprenant en outre une source d'énergie (1020) électriquement connectée auxdits premier et deuxième éléments allongés conducteurs s'étendant depuis lesdites extrémités ouvertes dudit segment de ligne droite de tuyau de raccordement isolé (905, 1105).

4. Dispositif selon la revendication 3, ladite source d'énergie (1020) étant une source de courant alternatif (CA) ou une source de courant continu (CC).

5. Dispositif selon la revendication 3, comprenant en outre une pluralité de segments de tuyau vertical (925) fixés audit segment de ligne droite de tuyau de raccordement isolé (905, 1105).

6. Dispositif selon la revendication 5, chacun desdits segments de tuyau vertical (925) présentant une longueur dans la plage allant de 4 pouces à environ 36 pouces ;
lesdits segments de tuyau vertical (925) étant espacés sur ledit segment de ligne droite de tuyau de raccordement isolé (905, 1105), avec un espacement d'environ 6 pouces à environ 4 pieds, formant ainsi un réseau linéaire de segments de tuyau vertical (925) fixés à un segment de ligne droite de tuyau de raccordement isolé (905, 1105), permettant ainsi de produire un réseau de segments de tuyau vertical unidimensionnel.

7. Dispositif selon la revendication 6, comprenant en outre une pluralité de segments de tuyau vertical complémentaires (925) agencés généralement parallèlement les uns aux autres, lesdits segments de ligne droite de tuyau de raccordement isolé (905, 1105) étant chacun électriquement connectés les uns aux autres en série avec ladite source d'énergie (1020) et présentant un espacement latéral dans la plage d'environ 12 pouces à environ 4 pieds, permettant ainsi de former un réseau de segments de tuyau vertical (925) bidimensionnel.

8. Procédé de réduction de la lixiviation d'un engrais ionique dans l'eau souterraine, comprenant :
la fourniture d'un dispositif selon la revendication 1 ;
l'insertion dudit dispositif dans un lit (910, 1120) de terre ;
le raccordement dudit dispositif à une source (1020) d'énergie électrique ; et
le fait d'amener un courant électrique à circuler à travers ladite boucle, permettant ainsi de produire un champ magnétique avec des lignes de champ magnétique (230, 250) généralement orientées perpendiculairement audit axe central dudit dispositif.

9. Procédé de réduction de la lixiviation d'un engrais ionique dans l'eau souterraine, comprenant :
la fourniture d'un dispositif selon la revendication 7 ;
l'insertion des segments verticaux (925) dudit dispositif dans un lit (910, 1120) de terre ;
le raccordement dudit dispositif à une source (1020) d'énergie électrique ; et
le fait d'amener un courant électrique à circuler à travers au moins une de ladite pluralité de boucles, permettant ainsi de produire au moins un champ magnétique avec des lignes de champ magnétique (230, 250) généralement orientées perpendiculairement audit axe central dudit au moins un desdits tuyaux verticaux (925).

10. Procédé selon la revendication 9, où ladite source (1020) d'énergie électrique est une source de courant alternatif (CA), fonctionnant à :
une tension allant de 1,0 volt (V) à environ 100 V,
une fréquence allant de 60 Hertz (Hz) à environ 1 gigahertz (GHz), et
une puissance allant de 10⁻² ampères (A) à environ 15 A.

11. Procédé selon la revendication 9, dans lequel l'intensité du champ magnétique d'au moins un de ladite pluralité de champs magnétiques, se situe dans une plage d'environ 10⁻⁶ Tesla (T) à environ 1,0 T.

12. Procédé selon la revendication 11, ladite intensité du champ magnétique d'au moins un de ladite pluralité de champs magnétiques est mesurée à l'aide d'un Gaussmètre.

13. Procédé selon la revendication 12, ledit Gaussmètre comprenant soit :
un détecteur généralement plan et détecte l'intensité du champ magnétique au-dessus de la surface dudit lit (910, 1120) ; ou
une sonde insérée dans le lit (910, 1120) de terre pour mesurer l'intensité du champ magnétique sous la surface dudit lit (910, 1120).

14. Procédé selon la revendication 11, ladite intensité du champ magnétique étant estimée à la surface dudit lit (910, 1120) de terre à l'aide d'un morceau de matériau non conducteur présentant une couche de magnétite de sable noir (Fe : ,0.i) sur celui-ci.

15. Procédé selon la revendication 11, ledit engrais ionique étant choisi parmi soit :
le groupe de nitrates, phosphates et sulfates ; ou
le groupe constitué par le thiosulfate d'ammonium (12-0-0-26s), le polyphosphate d'ammonium (10-34-0), le nitrate d'ammonium et d'urée (UAN32), le nitrate d'ammonium 20 % (AN20) et le nitrate de calcium (CN9).
